# EUROPEAN PATENT SPECIFICATION

(11) **EP 3 811 767 B1**
(45) Date of publication and mention of the grant of the patent: **09.08.2023**
(21) Application number: 20203521.8
(22) Date of filing: 23.10.2020
(51) Int. Cl.: A01F 12/39

(54) **COMBINE HARVESTER MACHINE FOR COLLECTING GRAIN FROM HERBACEOUS PLANTS**
MÄHDRESCHERMASCHINE ZUM ERNTEN VON KÖRNERN VON GRASARTIGEN PFLANZEN
MOISSONNEUSE-BATTEUSE POUR LA RÉCOLTE DE GRAINES À PARTIR DE PLANTES HERBACÉES

(30) Priority: 24.10.2019 IT 201900019703
(43) Date of publication of application: 28.04.2021
(73) Proprietor: Ecostargreen S.r.l., 36066 Sandrigo (VI) (IT)
(72) Inventor: CAPPOZZO, Domenico, 36066 Sandrigo (VI) (IT)
(74) Representative: Caldon, Giuliano

(56) References cited:
- EP-A1- 0 212 146
- EP-A1- 0 870 436
- EP-A2- 1 082 912
- EP-B1- 0 699 379
- EP-B1- 3 199 010
- DE-A1- 3 328 459
- DE-A1- 3 631 261
- DE-A1- 3 636 668
- DE-A1-102017 124 170
- DE-A1-102018 108 879
- DE-B- 1 053 230
- DE-B- 1 071 999
- DE-B- 1 117 935
- DE-C- 403 409
- DE-C- 448 154
- DE-C- 530 946
- DE-C- 867 470
- DE-C- 875 424
- DE-C- 975 227
- DE-U1- 29 915 450
- GB-A- 2 085 703
- RU-C1- 2 415 548

## Description

### Field of application

The present invention regards a combine harvester machine for collecting grain from herbaceous plants, according to the preamble of the main independent claim.

The present combine harvester machine is inserted in the industrial field of production of farming machines and is advantageously intended to be used on farming terrain during the collection of the plants cultivated in the terrain itself.

The machine, object of the invention, is advantageously intended to be employed during the harvest for the harvesting and threshing of herbaceous plants, such as for example corn, sunflowers, wheat or soy, i.e. in order to detach the grain thereof from the stem and to collect the grain itself.

Therefore, the combine harvester machine, object of the present invention, advantageously has use in the industrial field of the production of combine harvesters for cultivations, in particular for herbaceous plants, on cultivated ground.

### State of the art

Combine harvester machines are presently available on the market that are capable of being driven along a substantially rectilinear direction on a cultivated terrain in order to harvest the cultivations present therein, collecting them and threshing them, i.e. in order to detach the stem of each plant from the grain. In addition, the combine harvester machines of known type are capable of separating and collecting the detached grain from the stem and conveying it into a tank or alternatively transport it towards a collection vehicle intended to flank the combine harvester machine itself during the harvest.

This type of machinery is generally used with a great variety of herbaceous plants, for example plants of cereals, such as corn, wheat, barley and rice, or soy or sunflower plants.

In general, the combine harvester machines of known type are provided with a self-propelling support frame, susceptible of advancing along a substantially rectilinear direction, harvesting and collecting the plants.

For such purpose, the known combine harvester machines are provided with a harvesting unit comprising a cutting head, generally mounted on the support frame at a front portion of the frame itself with respect to the advancing direction of the machine. Generally, the cutting heads of the harvesting units can be substituted with different cutting heads based on the type of cultivation that one intends to harvest. The most common cutting heads are provided with a plurality of blades, fixed on a bar cutting parallel to the ground and intended to cut off stem of the plants in proximity to the ground.

The combine harvester machines of known type are also usually provided with a threshing unit placed downstream of the harvesting unit with respect to the advancing direction of the machine, which is adapted to detach the grain from the stem of the plants previously cut by the cutting head of the harvesting unit. In particular, the transport of the plants to the threshing unit generally occurs by means of a belt conveyor mounted on the cutting head.

The threshing unit generally comprises a plurality of threshing rollers, usually present in a number equal to three, mounted on the support frame and adapted to cooperate with a grid counter-shaped thereto, termed concave, and mounted below the threshing rollers themselves.

In operation, the threshing rollers are actuated to rotate in a rotation sense such to convey the plants between the rollers themselves and the concave and in order to exert a mechanical stress on the plants that allows detaching the grain from the stem. The grain detached from the stem is then intended to fall by gravity below the concave, passing through the holes of the grid, and to be collected by an underlying container. The threshing units described briefly above, arranged on the combine harvester machines of known type are capable of separating and collecting most of the grain present on the plants.

In addition, the combine harvester machines of known type are generally provided with a shaking unit, which is mounted on the support frame downstream of the threshing unit and is intended to collect the grain remaining on the plants.

In particular, the shaking unit is provided with a straw walker, comprising a bed tilted upward between a front section thereof and a rear section thereof, which is susceptible of being oscillated by means of a motor connected thereto by means of an eccentric shaft and is adapted to convey upward the plants coming from the threshing unit by means of its oscillatory motion.

In addition, the tilted bed is provided with a plurality of holes which allow the passage of the grain residual below the tilted bed itself, where a collection container for the grain is positioned.

The stem of the plants, which represents waste material, is generally sent to an accessory straw chopper unit, which is mounted at a rear portion of the support frame of the combine harvester machine and is susceptible of chopping up the stem of the plants and scattering it behind the machine itself following the passage thereof.

As an alternative to arranging the straw chopper unit, combine harvester machines are provided with attached baler or roto-baler machines, which produce balls of straw by pressing the waste material and shaping it in parallelepiped or cylindrical form.

The combine harvester machines of the known type described above have in practice shown that they do not lack drawbacks.

The main drawback of these combine harvester machines of known type lies in the fact that the conventional straw walkers mounted on such machines require a great expenditure of energy. Indeed the motor connected to the tilted bed consumes a high quantity of energy in order to oscillate the entire bed, which generally is provided with rather large dimensions and high weights.

A further drawback of these machines of known type lies in the low efficiency of separation and collection associated with the oscillatory system. Indeed, the straw walker mounted on the machines of known type, using only the oscillation of the tilted bed in order to shake the plants and to make the grain fall, require high lengths for recovering the remaining percentage of grain not recovered by the threshing unit. Therefore, the bulk of such combine harvester machines is considerably high and also involves a high increase of weight of the machine.

In order to overcome the abovementioned technical problems, combine harvester machines are known that are provided with shaking units provided with one or more helical rotors, mounted on the support frame with rotation axis parallel to the movement of the straw and with a semi-circular grating placed below the helical rotor.

In operation, the helical rotor is rotated in order to drive, in a spiral motion, the plants coming from the threshing unit. Such spiral motion generates a centrifugal force such to bring the plants to slide against the grating and to separate the grain from the stem of the plants, thus allowing the passage of the grain through the grating, and driving the plants towards an outlet section of the shaking unit.

Also the latter type of combine harvester machines of known type has in practice shown that it does not lack drawbacks.

The main drawback of this machines of known type lies in the fact that they can cause the damage of the grain, in particular when the harvest is moist. Indeed, the great centripetal force that is imparted by the helical rotor rotating at high speed pushes, with force, the grain against the grating, causing the smashing or crushing thereof.

A further drawback of such machines of known type lies in the fact that they are unable to efficiently separate the grain from the stem of the plants. Indeed, the helical rotor, due to its inertia, can break the stem of the plants into sufficiently small pieces to pass beyond the grating together with the grain.

Finally, a further drawback of such machines of known type lies in the fact that they are unsuitable for plants with short stem, thick stem or stem with little flexibility. In particular, the helical rotor of the shaking unit does not allow treating plants like the sunflower, since such plants have a thick stem and are not provided with sufficient flexibility in order to follow the spiral motion imparted by the rotor, and therefore can cause blockage of the shaking unit itself.

In order to at least partly resolve the aforesaid drawbacks, combine harvester machines are known on the market whose shaking unit is formed by a rotary roller screen. One example of such machines of known type is described in the patent application DE 3328459 A1. In particular, the screen of the machine described in this document comprises multiple rotary drums, each of which is provided on its external surface with three rows of triangular tips, which, following the rotation of the drums, pass between the tips of the adjacent drums.

Also this solution of known type, however, does not lack drawbacks, linked in particular to a poor flexibility of use and to the difficulty of adaptation of the shaking unit to different harvest types.

### Presentation of the invention

In this situation, the problem underlying the present invention is therefore that of overcoming the drawbacks manifested by the abovementioned solutions of known type by providing a combine harvester machine, which allows collecting grain from herbaceous plants with high efficiency and flexibility of use.

A further object of the present invention is to provide a combine harvester machine, which allows preventing the presence of impurities in the collected grain.

A further object of the present invention is to provide a combine harvester machine, which allows collecting the grain without damaging it.

A further object of the present invention is to provide a combine harvester machine, which is provided with limited bulk, and in particular which allows obtaining a limited length of the machine.

A further object of the present invention is to provide a combine harvester machine, which allows a versatile use, for a great variety of cultivations.

A further object of the present invention is to provide a combine harvester machine, which is simple and inexpensive to attain.

### Brief description of the drawings

The technical characteristics of the present invention, according to the aforesaid objects, can be seen in the contents of the below-reported claims and the advantages thereof will be more evident in the following detailed description, made with reference to the enclosed figures, which represent several merely exemplifying and non-limiting embodiments of the invention, in which:
- figure 1 shows a sectional schematic view of a preferred embodiment of the combine harvester machine, object of the invention;
- figure 2 shows a perspective view of a disc screen of a first embodiment of the combine harvester machine, object of the invention;
- figure 3 shows a plan view of the disc screen in figure 2;
- figure 4 shows a section of the disc screen of figure 3, made along the trace IV-IV of figure 3;
- figure 5 shows a perspective view of a disc screen of a second embodiment of the combine harvester machine, object of the invention;
- figure 6 shows a plan view of the disc screen in figure 5;
- figure 7 shows a section of the disc screen of figure 6, made along the trace VII-VII of figure 6;
- figure 8 shows a schematic side view of the disc screen according to a third embodiment of the combine harvester machine, object of the invention, in which several details are represented in transparent view (dashed lines) in order to show the elements that lie behind.

### Detailed description of several preferred embodiments

With reference to the enclosed claims, reference number 1 overall indicates a combine harvester machine in accordance with the present invention.

The combine harvester machine 1 according to the invention is advantageously intended to be employed for harvesting and threshing herbaceous plants E cultivated on a farming terrain. In particular, such plants comprise a stem F planted in the ground and grain G attached to the stem F.

Of course, the combine harvester machine 1 can also be intended to collect and thresh plants E that were already previously cut, or it can be intended to thresh plants E cut and collected by a different machine without departing from the protective scope of the present patent.

Hereinbelow, with the term "harvesting" it will be intended the activity of cutting and collecting herbaceous plants E.

In addition, with the term "threshing" it will be intended the activity of detaching and separating the grain G from the stem F of the aforesaid plants E and of collecting the grain G itself.

In addition, with the expression "herbaceous plants", or more simply "plants", it will be indicated the category of plants comprising in particular plants of cereals, such as for example wheat, corn or grain, sunflower plants, soy plants, as well as all the other plants susceptible of being subjected at least to threshing.

In addition, with the term "grain" it will be intended the assembly of any grain or seed type of herbaceous plants E that one intends to collect during the harvesting and threshing of the aforesaid plants, whether these are for example of any type of cereal or sunflower.

Finally, with the term "stem" it will be intended the entire part of the plant which represents waste material of the threshing, e.g. comprising leaves, stem, straw, branches or spikes lacking grains.

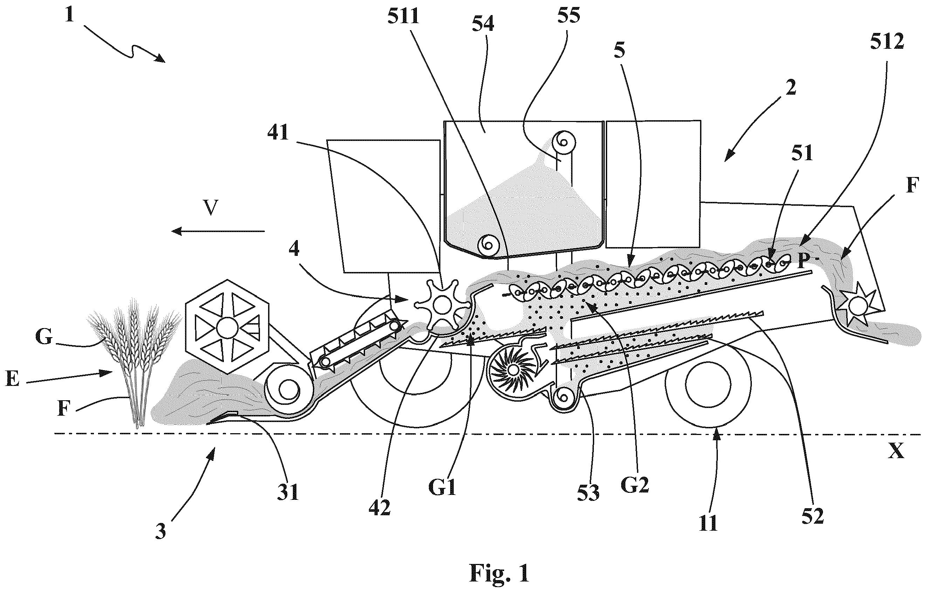

The combine harvester machine 1, object of the present invention, comprises a support frame 2 susceptible of advancing on the ground along an advancing direction X. According to the preferred embodiment illustrated in the enclosed figure 1, in order to advance along the aforesaid advancing direction X the combine harvester machine is advantageously provided with its own locomotion means 11. Of course, the combine harvester machine 1 can otherwise be towed by a tractor or moved by other locomotion means without departing from the protective scope of the present patent.

More in detail, the support frame 2 of the combine harvester machine 1, object of the present invention, is susceptible of advancing in an advancing sense V (indicated with an arrow in the enclosed figure 1) along the aforesaid advancing direction X. Advantageously, in the present description, the term "front" will indicate portions of the combine harvester machine 1 directed in the same sense as the advancing sense V of the combine harvester machine 1 itself. In addition, the term "rear" will indicate portions of the combine harvester machine 1 directed in opposite sense with respect to the advancing sense V of the combine harvester machine 1.

The combine harvester machine 1, object of the present invention, also comprises a harvesting unit 3 mounted on the support frame 2 and intended to cut and collect the herbaceous plants E. Advantageously, the harvesting unit 3 is mounted on a front portion of the support frame 2 of the combine harvester machine 1.

In particular, the harvesting unit 3 is provided with a cutting head 31, which is advantageously interchangeable as a function of the type of herbaceous plants E that one intends to harvest.

The combine harvester machine 1, object of the present invention, also comprises a threshing unit 4 mounted on the support frame 2 downstream of the harvesting unit 3 with respect to the advancing sense V. Advantageously, the threshing unit 4 is susceptible of receiving, from the harvesting unit 3, the cut and collected herbaceous plants E and it is intended to operate on the herbaceous plants E in order to detach at least one part of the grain G from the stem F and to separate and collect a first fraction G1 of the detached grain G.

For such purpose, the threshing unit 4 is advantageously provided with at least one threshing roller 41, which is rotatably mounted on the support frame 2 and is intended to be moved in order to move around a rotation axis thereof. Advantageously, moreover, the threshing unit 4 is provided with at least one concave grid 42, placed below the threshing roller 41 with curved form having the concave side towards the threshing roller 41. In operation, the threshing roller 41 is advantageously actuated in its rotation motion in order to convey the plants coming from the harvesting unit 3 between the threshing roller 41 itself and the concave grid 42, operating on the herbaceous plants E a mechanical stress adapted to detach the grain G from the stem F. Then, the first fraction G1 of grain G is advantageously intended to cross the concave grid 42 and to be collected, as illustrated in the general scheme in the enclosed figure 1. Advantageously, the movement of the threshing roller 41 conveys the plants E to advance along, towards the rear side of the combine harvester machine 1 (with opposite sense with respect to the advancing sense V).

The harvesting unit 3 and the threshing unit 4 of the combine harvester machine 1 are preferably of the type known in the field and therefore will not be described in more detail in the present patent.

The combine harvester machine 1, object of the invention, also comprises a shaking unit 5 mounted on the support frame 2 downstream of the threshing unit 4 (with respect to the advancing sense V) and intended to separate and collect a second fraction G2 of the grain G from the herbaceous plants E received from the threshing unit 4 itself. In particular, the shaking unit 5 is adapted to detach further grain G possibly still attached to the stem F of the herbaceous plants E.

According to the idea underlying the present invention, the shaking unit 5 of the combine harvester machine 1 comprises a disc screen 51 intended to shake the herbaceous plants E in order to separate the second fraction G2 of grain G from the stem F.

The disc screen 51 is extended, according to an extension direction S, from an inlet section 511 to an outlet section 512 (placed downstream of the inlet section 511 according to the advancing sense V).

The inlet section 511 of the disc screen 51 is intended to be crossed by the herbaceous plants E coming from the threshing unit 4, and the outlet section 512 is intended to be crossed by the stems F of the herbaceous plants E separated by the second fraction G2 of grain G.

According to the idea underlying the present invention, moreover, the disc screen 51 is provided with a plurality of rotary shafts 6, rotatably mounted on the support frame 2. The rotary shafts 6 are positioned parallel to each other, defining an advancing plane P, above which the herbaceous plants E are advantageously intended to be moved.

In particular, the rotary shafts 6 are placed, along such advancing plane P, in succession one after the other according to the extension direction S (preferably parallel the advancing plane P) of the disc screen 51, with each rotary shaft 6 spaced from the subsequent rotary shaft 6.

Each rotary shaft 6 is longitudinally extended along a rotation axis Y thereof, placed preferably orthogonal to the extension direction S and parallel to the advancing plane P.

The inlet section 511 of the disc screen 51 is placed upstream of the plurality of rotary shafts 6 and the outlet section 512 of the disc screen 51 is placed downstream of the plurality of rotary shafts 6.

The advancing plane P defined by the rotary shafts 6 of the disc screen 51 is preferably tilted upward, from the inlet section 511 to the outlet section 512, in particular with the outlet section 512 placed at a height with respect to the ground that is greater than the height of the inlet section 511.

Preferably, the rotary shafts 6 are provided with an external transverse profile with polygonal shape, still more preferably hexagonal or square shape. Of course, the rotary shafts 6 can be provided with an external transverse profile with any other shape without departing from the protective scope of the present patent.

In accordance with a preferred embodiment, the disc screen 51 is preferably provided with two lateral containment walls, not illustrated in the enclosed figures, which are mounted on the support frame 2, extended parallel to the extension direction S and placed substantially vertically with respect to the ground and are advantageously parallel to each other and perpendicular with respect to the advancing plane P. In particular, the space comprised laterally between the aforesaid lateral containment walls and between the inlet and outlet sections 511, 512 of the disc screen 51 defines a work volume, within which the herbaceous plants E are advantageously intended to be moved.

Advantageously, the disc screen 51, also comprises a support structure 510, which is mounted on the support frame 2 of the combine harvester machine 1. More in detail, the support structure 510 is provided with two lateral longitudinal members, which are extended along the extension direction S and are substantially parallel to each other and advantageously parallel to the lateral containment walls. In particular, each lateral longitudinal member is placed outside the work volume with respect to the lateral containment walls. In addition, the aforesaid lateral containment walls can be advantageously fixed to the lateral longitudinal members or coincide therewith. Advantageously, moreover, the rotary shafts 6 of the disc screen 51 are provided with two ends 61, each of which supported by the corresponding lateral longitudinal member.

Suitably, each of the ends 61 of the rotary shafts 6 is placed to cross the corresponding lateral containment wall. For such purpose, on each lateral containment wall, a plurality of through holes are advantageously made, preferably aligned with each other and facing with respect to corresponding through holes on the opposite lateral containment wall, in order to allow the insertion of the ends 61 of the rotary shafts 6.

According to the invention, the disc screen 51 is also provided with motorization means 7 mechanically connected to the rotary shafts 6 in order to actuate them to rotate in a rotation sense U around their rotation axis Y.

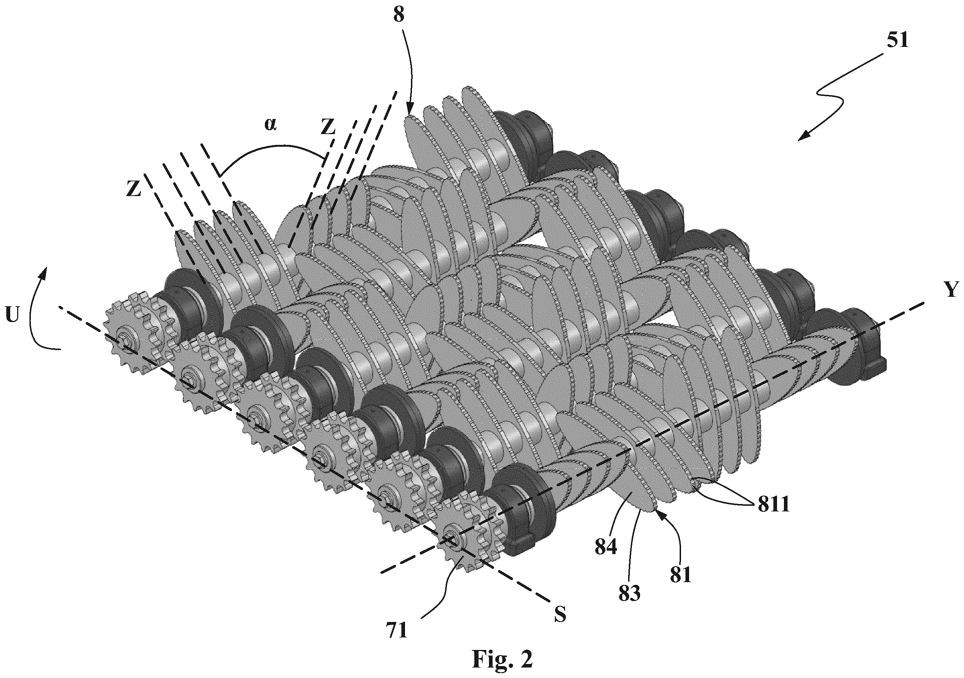

In accordance with the embodiments illustrated in the enclosed figures 2, 3, 5, 6 and 8, the disc screen 51 is provided with a plurality of rolling support elements 513, mounted on the support frame 2, and more particularly on the support structure 510 (preferably on the lateral longitudinal members of the latter). Advantageously, the rolling support elements 513 comprise a plurality of bearings 514, on which the ends 61 of the rotary shafts 6 are mounted, so as to allow the rotation of the rotary shafts 6 themselves. In particular, the rolling support elements 513 are preferably placed outside the work volume with respect to the lateral containment walls. Advantageously, the motorization means 7 of the disc screen 51 comprise actuation means and a plurality of toothed wheels 71, each of which is mounted on one of the ends 61 of the corresponding rotary shaft 6. Preferably, the toothed wheels 71 are fit on each rotary shaft 6. According to a preferred embodiment variant, not illustrated in the enclosed figures, only one toothed wheel 71 is mounted on each rotary shaft 6. Of course, it is possible that multiple toothed wheels 71 be mounted for each shaft, e.g. two, as in the embodiments illustrated in the enclosed figures 2, 3, 5 and 6, without departing from the protective scope of the present patent.

For example, the actuation means comprise an electric or hydraulic motor, which is advantageously connected to the toothed wheels 71 through motion transmission means mechanically connected to the motor. Preferably such motion transmission means in turn comprise a chain 72 wound as a closed ring and being engaged with a pinion 73 fixed to a shaft of the motor and with the toothed wheels 71. Preferably, in addition, the transmission means comprise at least one chain tensioner toothed wheel 74 removably mounted on the support frame and intended to be adjusted in its position in order to act on the chain 72 and bring it under tension.

In particular, the motorization means 7 are preferably placed outside the work volume with respect to the lateral containment walls.

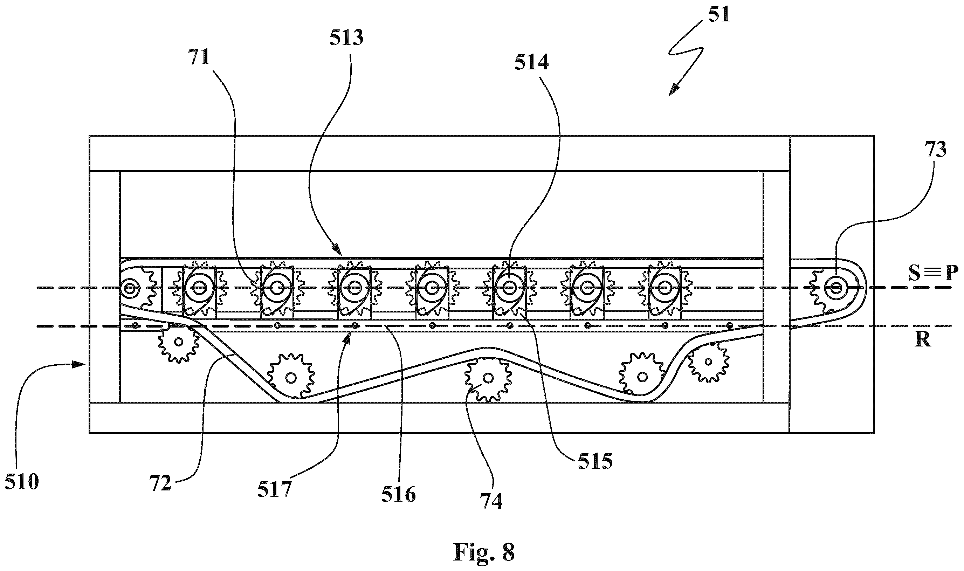

In accordance with a preferred embodiment illustrated in the enclosed figure 8, the rotary shafts 6 are mounted with position adjustable on the support frame 2, and in particular on the support structure 510 of the disc screen 51, so as to adjust the distances between them and thus the size of the screening section of the disc screen 51.

For such purpose, the support structure 510 of the disc screen 51 is provided with at least two lateral guides 516, each extended according to an adjustment direction R parallel to the extension direction S. Advantageously, the lateral guides 516 are each made on the corresponding lateral longitudinal member of the support structure 510.

Advantageously, the disc screen 51 also comprises multiple pairs of rolling support elements 513. Each pair of rolling support elements 513 carries, rotatably mounted thereon, a corresponding rotary shaft 6, and each rolling support element 513 of such pair is mounted on the corresponding lateral guide 516 in an adjustable manner along the adjustment direction R.

In addition, the lateral guides 516 and the rolling support elements 513 are preferably placed outside the work volume with respect to the lateral containment walls. More in detail, the rolling support elements 513 comprise, like the previously-described embodiments, a plurality of bearings 514 on which the ends 61 of the rotary shafts 6 are mounted. In addition, according to the embodiment of figure 8, each bearing 514 is advantageously mounted on a corresponding bearing-carrier slide 515, which is mounted in a slidable manner on the corresponding lateral guide 516 and is susceptible of being removably fixed to the latter in the desired position.

The disc screen 51 also comprises fixing means 517 mechanically connected to the rolling support elements 513 (and in particular to the bearing-carrier slides 515) in order to removably fix them to the lateral guide 516 in a specific position along the adjustment direction R.

In particular, on each rolling support element 513, preferably on the bearing-carrier slide 515, a slot is made that is placed substantially along the adjustment direction R, in which the fixing means 517 are susceptible of being engaged. More in detail, with the fixing means 517 inserted in the slot and tightened, the rolling support element 513 is in a fixed configuration. Otherwise, with the fixing means 517 loosened, the rolling support element 513 is in a configuration slidable along the lateral guide 516.

For example, the fixing means 517 comprise screws or bolts inserted in the aforesaid slots of the rolling support elements 513 and engaged with the corresponding lateral guides 516.

Suitably, in the latter embodiment, the through holes on the lateral containment walls advantageously have elongated form, so as to allow the translation of the rotary shafts 6. In operation, in order to adjust the distance between the rotary shafts 6 (and hence adjust the width of the screening section), is sufficient to loosen the fixing means 517, translate the rolling support elements 513 so as to move the rotary shafts 6 close or away and newly tighten the fixing means 517.

In such a manner, it is advantageously possible to adapt the screening section of the disc screen 51 to the type of grain G to be collected, e.g. in relation to the dimensions of the grain G itself.

According to the idea underlying the present invention, the disc screen 51 of the shaking unit 5 is also provided with a plurality of discs 8, which are mounted in succession along each rotary shaft 6 and are rotated by the rotary shaft 6 itself. Advantageously, the discs 8 are fixed to each rotary shaft 6, and preferably fit on the latter. More in detail, each disc 8 is advantageously perforated and provided with an internal profile that is counter-shaped with respect to the external profile of the corresponding rotary shaft 6. In particular, each disc 8 is provided with two opposite lateral faces 84 intercepted by the rotation axis Y and preferably orthogonal to the latter. Suitably, the two lateral faces 84 of each disc 8 are parallel to each other and preferably substantially flat. Advantageously, each lateral face 84 of the disc 8 is delimited externally by a peripheral edge 83 extended around the rotation axis Y of the corresponding rotary shaft 6. According to the invention, each disc 8 is provided with a peripheral surface 81, with shaped form, extended around the rotation axis Y of the corresponding rotary shaft 6. Advantageously, such peripheral surface is extended between the peripheral edges 83 of the two lateral faces 84 of the disc 8, in particular defining the thickness of the disc 8 between the two lateral faces 84 themselves.

Advantageously, the distance between the rotary shafts 6 along the extension direction S and the distance between the discs 8 along the rotation axis Y of the corresponding rotary shaft 6 define the screening section of the disc screen 51.

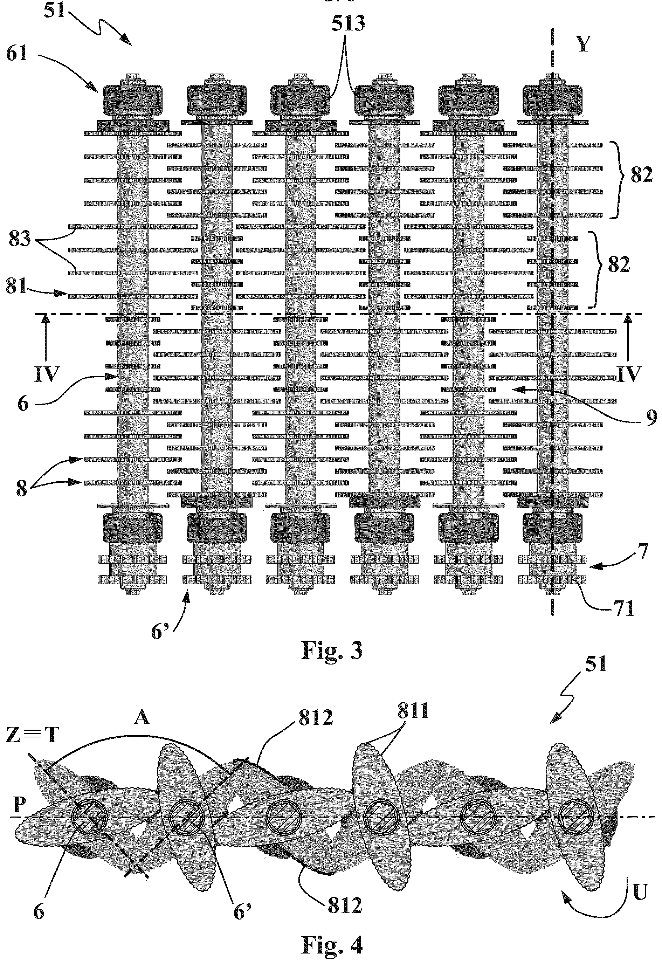

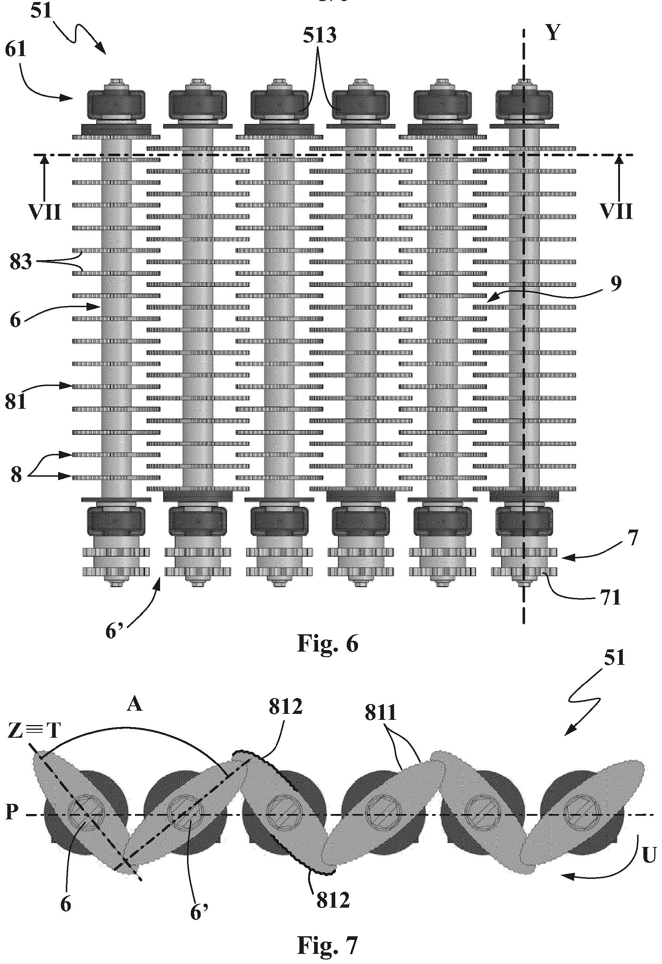

More in detail, the discs 8 of each rotary shaft 6 define, on the advancing plane P, a shaped interspace 9 between each pair of successive rotary shafts 6, as is visible for example in the examples of figures 3 and 6.

In particular, the discs 8 mounted on each rotary shaft 6 are mounted offset with respect to the discs 8 mounted on the successive rotary shaft 6, in a manner such that, preferably, between two adjacent discs 8 mounted on the same rotary shaft 6, at least one disc 8 is interposed that is mounted on the successive rotary shaft 6, leaving a lateral interstice between each of the discs 8 of the rotary shaft 6 and the interposed disc 8 of the successive rotary shaft 6.

According to the invention, following the rotation of the discs 8, their peripheral surface is susceptible of impacting against the herbaceous plants E coming from the threshing unit 4, of driving the stems F of the herbaceous plants E along the advancing plane P and of making the second fraction G2 of grain G fall by gravity through the shaped interspace 9 defined between the discs 8.

Advantageously, each disc 8 is mainly extended, preferably with elongated shape, according to a main axis Z (and in particular a single main axis Z) orthogonal to the rotation axis Y of the corresponding rotary shaft 6.

Such advantageous form of the disc 8 is defined by the peripheral edges 83 of the lateral faces 84 of the disc 8 itself, which define the shaped form of the peripheral surface 81.

In this manner, each disc 8 is provided with a shape such to advantageously operate an improved advancing action and an improved shaking action on the herbaceous plants E, as described hereinbelow. In addition, due to the main extension of the discs 8, the dimensions of the shaped interspace 9 defined between them are advantageously susceptible of varying during the rotation of the discs 8 themselves.

In general, the shaped form of the peripheral surface 81 of the disc 8 is such that, during the rotation of the disc 8 itself, it cyclically varies the screening section of the disc screen 51.

In particular, each disc 8, during its rotation, crosses the screening surface in succession with the parts with smaller width and then with the parts with larger width, hence varying the opening of the screening section (and in particular of the shaped interspace 9).

Of course, the discs 8 can have any shaped form suitable to vary the screening section, even with shape different from that of the particular examples illustrated in the enclosed figures. In particular, the discs 8 do not have to be oval, for example they can have polygonal form (triangular, quadrangular, hexagonal), or they can be mounted in an eccentric manner with respect to the rotary shaft 6.

In operation, each rotary shaft 6 is actuated by the motorization means 7, rotating each disc 8 mounted on the rotary shaft 6 itself and the shaped peripheral surface 81 of at least one of the discs 8 intercepts the herbaceous plants E with a contact portion 812. More in detail, such contact portion 812 intercepts the herbaceous plants E substantially when it is situated in a first position placed at the advancing plane P, in particular to cross the advancing plane P itself, directed towards the inlet section 511 of the herbaceous plants E. The contact portion 812 also advantageously describes, starting from such position, a first arc of a circle subtended by an angle of about 90°, in which it drives the herbaceous plants E along the advancing plane P and simultaneously upward, away from the advancing plane P itself. Subsequently, such portion describes a second arc of a circle subtended by an angle of about 90°, in which it advantageously allows the herbaceous plants E to fall towards the advancing plane P and the herbaceous plants E themselves are intercepted by the contact portion 812 of one of the successive discs 8, continuing the advancement.

In this manner, advantageously the plants E are not only driven along the advancing plane P, but are also progressively stressed as they advance in order to separate the grain G from the stem F. Preferably, the rotation speed of the discs 8 is high enough to impart an inertia to the herbaceous plants E that is sufficient to throw them upward, spacing them from each other and allowing the grain G to fall by gravity.

In accordance with a particular embodiment, illustrated in the enclosed figures, each of the discs 8 of the disc screen 51 is advantageously provided with elliptical form with the main axis Z coinciding with the greater axis of the ellipse. Suitably, the rotation axis Y of the rotary shaft 6 passes through the center of the elliptical form of each disc 8 mounted thereon. In accordance with an embodiment variant of the present invention, not illustrated in the enclosed figures, each of the discs 8 of the disc screen 51 is provided with oval form and is eccentric with respect to the rotation axis Y of the corresponding rotary shaft 6.

In order to further improve the interaction of the peripheral surface 81 of the discs 8 with the herbaceous plants E, the peripheral surface 81 of each disc 8 of the disc screen 51 is advantageously provided with a plurality of teeth 811 placed projectingly from the peripheral surface 81 itself, as illustrated in the enclosed figures 2-7. In particular, the teeth 811 are advantageously provided with a width equal to the distance between the lateral faces 84 of the discs 8.

Advantageously, also, the teeth 811 are equally spaced one from the next along the extension of the peripheral surface 81 around the rotation axis Y.

In particular, the teeth 811 are placed at least along the contact portion 812 of the peripheral surface 81. Preferably, the teeth 811 are placed substantially along the entire peripheral surface 81.

Preferably, the teeth 811 define a substantially serrated (or sawtooth) profile of the peripheral edge 83 of the lateral faces 84 of the discs 8.

Suitably, the teeth 811 have size, both length-wise (according to a radial direction with respect to the rotation axis Y) and width-wise (according to the extension of the peripheral surface 81 around the rotation axis Y) of at least one order of magnitude smaller than the size of the corresponding disc 8 along the main axis Z of the latter. Advantageously, each disc 8 is provided, on its peripheral surface 81, with more than ten teeth 811, preferably more than twenty teeth 811, and still more preferably more than thirty teeth 811 (e.g. between forty and sixty teeth 811).

The presence of the aforesaid teeth 811 along the peripheral surface 81 advantageously allows increasing the extension at least of the contact portion 812 of the peripheral surface 81 and therefore also the stress on the herbaceous plants E.

In accordance with a first embodiment variant of the present invention illustrated in the enclosed figures 2-4, the discs 8 mounted on each rotary shaft 6 of the disc screen 51 are advantageously grouped into at least two units 82, wherein the discs 8 of each unit 82 have the main axes Z parallel to each other and lying on a same common tilt plane T. In addition, the tilt plane T of each unit of discs 82 is tilted, by a specific tilt angle α with respect to the tilt plane T of at least one other unit 82 of the discs 8 mounted on the same rotary shaft 6, in particular with respect to the adjacent unit 82 along the rotation axis Y of the rotary shaft 6.

Preferably, the aforesaid tilt angle α is substantially comprised between 40° and 80°, advantageously between 50° and 70°, for example substantially equal to 60°.

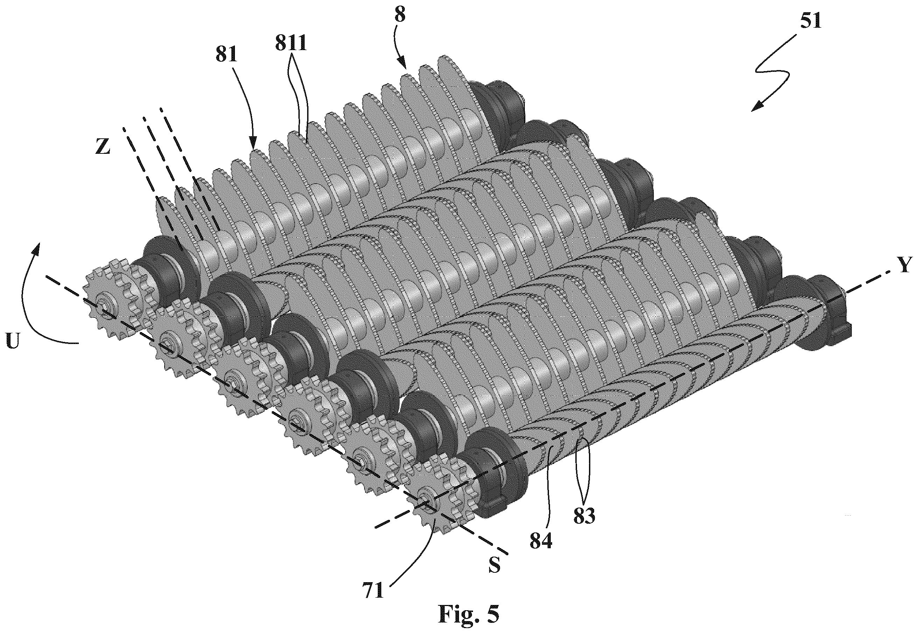

In accordance with a second embodiment variant of the present invention illustrated in the enclosed figures 5-7, all the discs 8 of each rotary shaft 6 have the main axes Z parallel to each other.

As illustrated in the enclosed figures 4 and 7, in the case of discs 8 having elliptical form, in order to increase the mechanical stresses imparted to the herbaceous plants E, the discs 8 of each rotary shaft 6 are angularly offset with respect to the discs 8 of the successive rotary shaft 6 by a specific offset angle A identified by the main axes Z of the discs 8 of the different rotary shafts 6.

In particular, the offset angle A is defined as the angle formed between a tilt plane T passing through one of the discs 8 mounted on one of the rotary shafts 6 and the tilt plane T passing through a corresponding disc 8 mounted on the adjacent rotary shaft 6. Preferably, such offset angle A is substantially comprised between 60° and 120°, more preferably between 80° and 100°, e.g. equal to about 90°.

In accordance with the preferred embodiment of the present invention, illustrated in figure 1, the shaking unit 5 of the combine harvester machine 1 is also provided with at least one separation grid 52, mounted on the support frame 2 below the advancing plane P of the disc screen 51. Advantageously the separation grid 52 is provided with a plurality of holes, adapted to allow the passage of the second fraction G2 of grain G that fell through the shaped interspace 9 defined between the discs 8 below the advancing plane P. In particular, the separation grid 52 has flat form and is extended substantially parallel to the advancing plane P at least between the inlet section 511 and the outlet section 512 of the disc screen 51. In addition, the separation grid 52 is advantageously placed tilted with respect to the ground.

In addition, the shaking unit 5 of the combine harvester machine 1 is advantageously provided with a collection container 53 for the second fraction G2 (and advantageously also or the first fraction G1) of grain G, mounted on the support frame 2 below the separation grid 52 in order to receive the grain G. In particular, the collection container 53 is susceptible of temporarily collecting at least the second fraction G2 of grain G separated from the stems F of the herbaceous plants E by the disc screen 51 and that fell through the separation grid 52.

Advantageously, the combine harvester machine 1 comprises a tank 54 mounted on the support frame and connected to the collection container 53 by means of conveyance means 55 (for example provided with a worm screw mechanism) adapted to transport the grain G from the collection container 53 to the tank 54.

The invention thus conceived therefore achieves the pre-established objects.

## Claims

1. Combine harvester machine (1) for collecting grain (G) from herbaceous plants (E), which comprises:
- a support frame (2) susceptible of advancing on the ground in an advancing sense (V) along an advancing direction (X);
- a harvesting unit (3) mounted on said support frame (2) and intended to cut and collect herbaceous plants (E), which comprise a stem (F) and grain (G) attached to the stem (F);
- a threshing unit (4), which is mounted on said support frame (2) downstream of said harvesting unit (3) with respect to said advancing sense (V), is susceptible of receiving, from said harvesting unit (3), the cut and collected herbaceous plants (E) and it is intended to operate on the herbaceous plants (E) in order to at least partially detach the grain (G) from the stem (F) and to separate and collect a first fraction (G1) of the detached grain (G);
- a shaking unit (5), which is mounted on said support frame (2) downstream of said threshing unit (4) with respect to said advancing sense (V), and is intended to separate and collect a second fraction (G2) of the grain (G) of said herbaceous plants (E);
wherein said shaking unit (5) comprises a disc screen (51), which is extended between an inlet section (511) and an outlet section (512) along an extension direction (S), and is provided with:
- a plurality of rotary shafts (6) rotatably mounted on said support frame (2), placed in succession one after the other along said extension direction (S), spaced one from the next, positioned parallel to each other and defining an advancing plane (P); each said rotary shaft (6) longitudinally extended along a rotation axis (Y) thereof substantially orthogonal to said extension direction (S);
- a plurality of discs (8) fixed to said rotary shafts (6) and positioned in succession, spaced one from the next, along the corresponding said rotary shaft (6); wherein said discs (8) define, between each pair of said adjacent rotary shafts (6), a shaped interspace (9) on said advancing plane (P);
- motorization means (7) mechanically connected to said rotary shafts (6) in order to actuate said discs (8) to rotate in one rotation sense (U) around the rotation axis (Y) of the corresponding said rotary shaft (6);
wherein each said disc (8) is provided with a peripheral surface (81), of shaped form, which is extended around the rotation axis (Y) of the corresponding said rotary shaft (6) and, following the rotation of said disc (8), it is susceptible of impacting against said herbaceous plants (E) in order to drive the stems (F) of the herbaceous plants (E) along said advancing plane (P) and make the second fraction (G2) of grain (G) fall by gravity through the shaped interspace (9) defined between said discs (8);
said combine harvester machine (1) being **characterized in that** said disc screen (51) comprises:
- a support structure (510), which is mounted on said support frame (2) and is provided with at least two lateral guides (516), each extended according to an adjustment direction (R) parallel to said extension direction (S);
- multiple pairs of rolling support elements (513), wherein each said pair carries, rotatably mounted thereon, corresponding said rotary shaft (6) and each rolling support element (513) of said pair is mounted on the corresponding said lateral guide (516) in an adjustable manner along said adjustment direction (R);
- fixing means (517) mechanically connected to said rolling support elements (513) in order to removably fix said rolling support elements (513) to said lateral guide (516) in a specific position along said adjustment direction (R).

2. Combine harvester machine (1) according to claim 1, **characterized in that** each said disc (8) is mainly extended along a main axis (Z) orthogonal to the rotation axis (Y) of the corresponding said rotary shaft (6).

3. Combine harvester machine (1) according to claim 2, **characterized in that** each of the discs (8) of said disc screen (51) is provided with elliptical form with said rotation axis (Y) passing through the center of each said disc (8).

4. Combine harvester machine (1) according to claim 2, **characterized in that** each of the discs (8) of said disc screen (51) is provided with oval form and is eccentric with respect to the corresponding said rotation axis (Y).

5. Combine harvester machine (1) according to any one of the preceding claims 2 to 4, **characterized in that**:
- the discs (8) mounted on each rotary shaft (6) of said disc screen (51) are grouped into at least two units (82) of discs (8), wherein the discs (8) of each said unit (82) have said main axes (Z) parallel to each other and lying on a same common tilt plane (T),
- the tilt plane (T) of each said unit (82) of discs (8) is tilted with respect to the tilt plane (T) of at least one other said unit (82) of the same said rotary shaft (6) by a tilt angle (α).

6. Combine harvester machine (1) according to claim 5, **characterized in that** said tilt angle (α) is substantially comprised between 40° and 80°.

7. Combine harvester machine (1) according to any one of the claims 1 to 4, **characterized in that** all said discs (8) of each said rotary shaft (6) have said main axes (Z) that are parallel to each other.

8. Combine harvester machine (1) according to any one of the preceding claims, **characterized in that** the peripheral surface (81) of each disc (8) of said disc screen (51) is provided with a plurality of teeth (811) placed projectingly from the peripheral surface (81).

9. Combine harvester machine (1) according to any one of the preceding claims, **characterized in that** said shaking unit (5) is provided with:
- at least one separation grid (52), mounted on said support frame (2) below the advancing plane (P) of said disc screen (51), and provided with a plurality of holes adapted to allow the passage of the second fraction (G2) of grain (G) that fell below said advancing plane (P);
- a collection container (53) mounted on said support frame (2) below said separation grid (52), and adapted to collect at least the second fraction (G2) of grain (G).

10. Combine harvester machine (1) according to any one of the preceding claims, **characterized in that** the discs (8) mounted on each rotary shaft (6) of said disc screen (51) are placed offset, along a direction parallel to said rotation axis (Y), with respect to the discs (8) mounted on said adjacent rotary shaft (6).

## Patentansprüche

1. Mähdreschermaschine (1) zum Ernten von Körnern (G) von grasartigen Pflanzen (E), die Folgendes umfasst:
- einen Tragrahmen (2), der geeignet ist, sich auf dem Boden in einer Fahrtausrichtung (V) entlang einer Fahrtrichtung (X) vorwärts zu bewegen;
- eine Mähgruppe (3), die auf dem genannten Tragrahmen (2) montiert und dazu bestimmt ist, grasartige Pflanzen (E) zu mähen und zu ernten, die einen Halm (F) und an dem Halm (F) haftende Körner (G) umfassen;
- eine Dreschgruppe (4), die an dem genannten Tragrahmen (2) im Verhältnis zu der genannten Fahrtausrichtung (V) der genannten Mähgruppe (3) nachgelagert montiert ist, geeignet ist, von der genannten Mähgruppe (3) die gemähten und geernteten grasartigen Pflanzen (E) zu erhalten und dazu bestimmt ist, die grasartigen Pflanzen (E) zu bearbeiten, um die Körner (G) zumindest teilweise vom Halm (F) zu lösen und einen ersten Anteil (G1) der gelösten Körner (G) zu trennen und zu sammeln;
- eine Rüttelgruppe (5), die auf dem genannten Tragrahmen (2) im Verhältnis zu der genannten Fahrtausrichtung (V) der genannten Dreschgruppe (4) nachgelagert montiert und dazu bestimmt ist, einen zweiten Anteil (G2) der Körner (G) der genannten grasartigen Pflanzen (E) zu trennen und zu sammeln;
wobei die genannte Rüttelgruppe (5) ein Scheibensieb (51) umfasst, das zwischen einem Eingangsabschnitt (511) und einem Ausgangsabschnitt (512) entlang einer Verlaufsrichtung (S) verläuft und mit Folgendem ausgestattet ist:
- einer Vielzahl von rotierenden Wellen (6), die drehbar auf dem genannten Tragrahmen (2) montiert, der Reihenfolge nacheinander entlang der genannten Verlaufsrichtung (S) im Abstand zur nächsten angeordnet sowie parallel zueinander positioniert sind und eine Fahrtebene (P) definieren; wobei jede genannte rotierende Welle (6) längs entlang einer eigenen Drehachse (Y) im Wesentlichen orthogonal zu der genannten Verlaufsrichtung (S) verläuft;
- einer Vielzahl von Scheiben (8), die an den genannten rotierenden Wellen (6) befestigt und der Reihe nach im Abstand zur nächsten entlang der entsprechenden genannten rotierenden Welle (6) positioniert sind; wobei die genannten Scheiben (8) zwischen jedem Paar der genannten angrenzenden rotierenden Wellen (6) einen profilierten Zwischenraum (9) in der genannten Fahrtebene (P) definieren;
- Motorisierungsmittel (7), die mechanisch mit den genannten rotierenden Wellen (6) verbunden sind, um die genannten Scheiben (8) in einer Drehausrichtung (U) um die Drehachse (Y) der entsprechenden genannten rotierenden Welle (6) in Drehung zu versetzen;
wobei jede genannte Scheibe (8) mit einer Außenfläche (81) profilierter Form ausgestattet ist, die um die Drehachse (Y) der entsprechenden genannten rotierenden Welle (6) herum verläuft und im Anschluss an die Drehung der genannten Scheibe (8) geeignet ist, gegen die grasartigen Pflanzen (E) zu stoßen, um die Halme (F) der grasartigen Pflanzen (E) entlang der genannten Fahrtebene (P) mitzunehmen und durch Schwerkraft den zweiten Anteil (G2) Körner (G) über den zwischen den genannten Scheiben (8) profilierten Zwischenraum (9) fallen zu lassen;
wobei die genannte Mähdreschermaschine (1) **dadurch gekennzeichnet ist, dass** das genannte Scheibensieb (51) Folgendes umfasst:
- eine Tragstruktur (510), die auf dem genannten Tragrahmen (2) montiert und mit mindestens zwei seitlichen Führungen (516) ausgestattet ist, die jeweils entlang einer Einstellrichtung (R) parallel zu der genannten Verlaufsrichtung (S) verlaufen;
- mehrere Paare Wälzlagerelemente (513), wobei jedes genannte Paar drehbar montiert eine entsprechende genannte rotierende Welle (6) trägt und jedes Wälzlagerelement (513) des genannten Paares auf der entsprechenden genannten seitlichen Führung (516) auf verstellbare Weise entlang der genannten Einstellrichtung (R) montiert ist;
- Befestigungsmittel (517), die mechanisch mit den Wälzlagerelementen (513) verbunden sind, um die genannten Wälzlagerelemente (513) lösbar in einer bestimmten Position entlang der genannten Einstellrichtung (R) an der genannten seitlichen Führung (516) zu befestigen.

2. Mähdreschermaschine (1) nach Anspruch 1, **dadurch gekennzeichnet, dass** jede genannte Scheibe (8) vorrangig entlang einer Hauptachse (Z) orthogonal zur Drehachse (Y) der entsprechenden genannten rotierenden Welle (6) verläuft.

3. Mähdreschermaschine (1) nach Anspruch 2, **dadurch gekennzeichnet, dass** jede der Scheiben (8) des genannten Scheibensiebs (51) mit einer elliptischen Form versehen ist, wobei die genannte Drehachse (Y) durch den Mittelpunkt jeder genannten Scheibe (8) verläuft.

4. Mähdreschermaschine (1) nach Anspruch 2, **dadurch gekennzeichnet, dass** jede der Scheiben (8) des genannten Scheibensiebs (51) mit einer ovalen Form versehen und im Verhältnis zu der entsprechenden genannten Drehachse (Y) exzentrisch ist.

5. Mähdreschermaschine (1) nach einem beliebigen der vorangegangenen Ansprüche 2 bis 4, **dadurch gekennzeichnet, dass**:
- die Scheiben (8), die auf jeder rotierenden Welle (6) des genannten Scheibensiebs (51) montiert sind, in mindestens zwei Gruppen (82) von Scheiben (8) gesammelt sind, in denen die Scheiben (8) jeder genannten Gruppe (82) die genannten Hauptachsen (Z) zueinander parallel und in einer selben gemeinsamen Neigungsebene (T) aufweisen,
- die Neigungsebene (T) jeder genannten Gruppe (82) von Scheiben (8) im Verhältnis zu der Neigungsebene (T) mindestens einer weiteren genannten Gruppe (82) derselben genannten rotierenden Welle (6) um einen Neigungswinkel (α) geneigt ist.

6. Mähdreschermaschine (1) nach Anspruch 5, **dadurch gekennzeichnet, dass** der genannte Neigungswinkel (α) im Wesentlichen zwischen 40° und 80° liegt.

7. Mähdreschermaschine (1) nach einem beliebigen der Ansprüche 1 bis 4, **dadurch gekennzeichnet, dass** bei allen genannten Scheiben (8) jeder genannten rotierenden Welle (6) die genannten Hauptachsen (Z) zueinander parallel sind.

8. Mähdreschermaschine (1) nach einem beliebigen der vorangegangenen Ansprüche, **dadurch gekennzeichnet, dass** die Außenfläche (81) jeder Scheibe (8) des genannten Scheibensiebs (51) mit einer Vielzahl von von der Außenfläche (81) vorstehend angeordneten Zähnen (811) ausgestattet ist.

9. Mähdreschermaschine (1) nach einem beliebigen der vorangegangenen Ansprüche, **dadurch gekennzeichnet, dass** die genannte Rüttelgruppe (5) mit Folgendem ausgestattet ist:
- mindestens einem Trenngitter (52), das an dem genannten Tragrahmen (2) unter der Fahrtebene (P) des genannten Scheibensiebs (51) montiert und mit einer Vielzahl von Öffnungen ausgestattet ist, die geeignet sind, den Durchgang des zweiten Anteils (G2) von Körnern (G) zu gestatten, der unter die genannte Fahrtebene (P) gefallen ist;
- einem Sammelbehälter (53), der an dem genannten Tragrahmen (2) unter dem genannten Trenngitter (52) montiert und geeignet ist, mindestens den zweiten Anteil (G2) von Körnern (G) zu sammeln.

10. Mähdreschermaschine (1) nach einem beliebigen der vorangegangenen Ansprüche, **dadurch gekennzeichnet, dass** die an jeder rotierenden Welle (6) des genannten Scheibensiebs (51) montierten Scheiben (8) entlang einer zu der genannten Drehachse (Y) parallelen Richtung im Verhältnis zu den an der genannten angrenzenden rotierenden Welle (6) montierten Scheiben (8) versetzt angeordnet sind.

## Revendications

1. Moissonneuse-batteuse (1) pour la récolte de graines (G) à partir de plantes herbacées (E), comprenant:
- un châssis de support (2) susceptible d'avancer sur le terrain dans un sens d'avancement (V) le long d'une direction d'avancement (X);
- un ensemble de moisson (3) monté sur ledit châssis de support (2) et destiné à couper et recueillir des plantes herbacées (E), qui comprennent une tige (F) et des graines (G) attachées à la tige (F);
- un ensemble de battage (4), qui est monté sur ledit châssis de support (2) en aval dudit ensemble de moisson (3) par rapport audit sens d'avancement (V), est susceptible de recevoir de la part dudit ensemble de moisson (3) les plantes herbacées (E) coupées et recueillies et est destiné à traiter les plantes herbacées (E) pour détacher au moins partiellement les graines (G) de la tige (F) et pour séparer et recueillir une première fraction (G1) des graines (G) détachée;
- un ensemble de secouement (5), qui est monté sur ledit châssis de support (2) en aval dudit ensemble de battage (4) par rapport audit sens d'avancement (V), et est destiné à séparer et recueillir une seconde fraction (G2) des graines (G) desdites plantes herbacées (E);
dans laquelle ledit ensemble de secouement (5) comprend un tamis du type à disque (51), qui se développe entre une section d'entrée (511) et une section de sortie (512) le long d'une direction de développement (S), et est doté de:
- une pluralité d'arbres rotatifs (6) montés de manière rotative sur ledit châssis de support (2), disposés en séquence l'un après l'autre le long de ladite direction de développement (S) espacés l'un de l'autre, positionnés parallèlement l'un à l'autre et définissant un plan d'avancement (P) ; chacun desdits arbres rotatifs (6) se développant longitudinalement le long de leur axe de rotation (Y) sensiblement orthogonal à ladite direction de développement (S);
- une pluralité de disques (8) fixés auxdits arbres rotatifs (6) et positionnés en séquence, espacés les uns des autres, le long dudit arbre rotatif (6) correspondant ; dans laquelle lesdits disques (8) définissent entre chaque paire desdits arbres rotatifs (6) adjacents un évidement façonné (9) sur ledit plan d'avancement (P);
- des moyens moteurs (7) reliés mécaniquement auxdits arbres rotatifs (6) pour actionner lesdits disques (8) afin qu'ils pivotent dans un sens de rotation (U) autour de l'axe de rotation (Y) dudit arbre rotatif (6) correspondant;
dans laquelle chaque disque (8) est doté d'une surface périphérique (81), mise en forme, qui se développe autour de l'axe de rotation (Y) dudit arbre rotatif (6) correspondant et, après la rotation dudit disque (8), il est susceptible de s'abattre contre lesdites plantes herbacées (E) pour entraîner les tiges (F) des plantes herbacées (E) le long dudit plan d'avancement (P) et faire tomber du fait de la force gravitationnelle la seconde fraction (G2) de graines (G) à travers l'évidement façonné (9) défini entre lesdits disques (8);
ladite moissonneuse-batteuse (1) étant **caractérisée en ce que** ledit tamis du type à disque (51) comprend:
- une structure de soutènement (510), qui est montée sur ledit châssis de support (2) et est pourvue d'au moins deux guides latéraux (516) se développant chacun selon une direction de réglage (R) parallèle à ladite direction de développement (S);
- plusieurs paires d'éléments de support au roulement (513), dans laquelle ladite paire soutient un arbre rotatif (6) correspondant monté de manière rotative et chaque élément de support au roulement (513) de ladite paire est monté sur ledit guide latéral (516) correspondant de manière réglable le long de ladite direction de réglage (R);
- des moyens de fixation (517) reliés mécaniquement auxdits éléments de support au roulement (513) pour fixer de manière amovible lesdits éléments de support au roulement (513) audit guide latéral (516) dans une position déterminée le long de ladite direction de réglage (R).

2. Moissonneuse-batteuse (1) selon la revendication 1, **caractérisée en ce que** chaque disque (8) se développe principalement le long d'un axe principal (Z) orthogonal à l'axe de rotation (Y) dudit arbre rotatif (6) correspondant.

3. Moissonneuse-batteuse (1) selon la revendication 2, **caractérisée en ce que** chaque disque (8) dudit tamis du type à disque (51) est en forme d'ellipse avec ledit axe de rotation (Y) passant à travers le centre de chaque disque (8).

4. Moissonneuse-batteuse (1) selon la revendication 2, **caractérisée en ce que** chaque disque (8) dudit tamis du type à disque (51) est de forme ovale et est excentrique par rapport audit axe de rotation (Y) correspondant.

5. Moissonneuse-batteuse (1) selon l'une quelconque des revendications précédentes 2 à 4, **caractérisée en ce que**:
- les disques (8) montés sur chaque arbre rotatif (6) dudit tamis du type à disque (51) sont regroupés en au moins deux ensembles (82) de disques (8), dans laquelle les disques (8) de chaque ensemble (82) ont lesdits axes principaux (Z) parallèles les uns aux autres et reposant sur un même plan d'inclinaison (T) commun,
- le plan d'inclinaison (T) de chaque ensemble (82) de disques (8) est incliné par rapport au plan d'inclinaison (T) d'au moins un autre ensemble (82) dudit même arbre rotatif (6) d'un angle d'inclinaison (α).

6. Moissonneuse-batteuse (1) selon la revendication 5, **caractérisée en ce que** ledit angle d'inclinaison (α) est sensiblement compris entre 40° et 80°.

7. Moissonneuse-batteuse (1) selon l'une quelconque des revendications 1 à 4, **caractérisée en ce que** tous lesdits disques (8) de chaque arbre rotatif (6) ont lesdits axes principaux (Z) parallèles les uns aux autres.

8. Moissonneuse-batteuse (1) selon l'une quelconque des revendications précédentes, **caractérisée en ce que** la surface périphérique (81) de chaque disque (8) dudit tamis du type à disque (51) est dotée d'une pluralité de dents (811) disposées de façon à faire saillie de la surface périphérique (81).

9. Moissonneuse-batteuse (1) selon l'une quelconque des revendications précédentes, **caractérisée en ce que** ledit ensemble de secouement (5) est doté de:
- au moins une grille de séparation (52), montée sur ledit châssis de support (2) sous le plan d'avancement (P) dudit tamis du type à disque (51), et dotée d'une pluralité de trous aptes à permettre le passage de la seconde fraction (G2) de graines (G) tombées sous ledit plan d'avancement (P);
- un réceptacle de récolte (53) monté sur ledit châssis de support (2) sous ladite grille de séparation (52), et apte à recueillir au moins la seconde fraction (G2) de graines (G).

10. Moissonneuse-batteuse (1) selon l'une quelconque des revendications précédentes, **caractérisée en ce que** les disques (8) montés sur chaque arbre rotatif (6) dudit tamis du type à disque (51) sont disposés de manière décalée, le long d'une direction parallèle audit axe de rotation (Y), par rapport aux disques (8) montés sur ledit arbre rotatif (6) adjacent.
